# EUROPEAN PATENT SPECIFICATION

(11) **EP 3 456 572 B1**
(45) Date of publication and mention of the grant of the patent: **23.06.2021**
(21) Application number: 17796102.6
(22) Date of filing: 08.05.2017
(51) Int. Cl.: B60K 35/00, G02B 27/01

(54) **HEAD-UP DISPLAY DEVICE**
HEAD-UP-ANZEIGEVORRICHTUNG
DISPOSITIF D'AFFICHAGE TÊTE HAUTE

(30) Priority: 10.05.2016 JP 2016094667
(43) Date of publication of application: 20.03.2019
(73) Proprietor: Nippon Seiki Co., Ltd., Nagaoka-shi, Niigata 940-8580 (JP)
(72) Inventor: YAMAZOE Takashi, Nagaoka Niigata (JP); KIKUCHI Yuta, Nagaoka Niigata (JP); MURASAWA Toru, Nagaoka Niigata (JP); TANAKA Shinichi, Nagaoka Niigata (JP); SAITO Maiko, Nagaoka Niigata (JP); UTO Yuya, Nagaoka Niigata (JP)
(74) Representative: Carpmaels & Ransford LLP
(86) International application number: PCT/JP2017/017418
(87) International publication number: WO 2017/195741

(56) References cited:
- WO-A1-2014/041694
- WO-A1-2016/060119
- JP-A- 2004 317 906
- JP-A- 2005 055 663
- JP-A- 2006 018 147
- JP-A- 2009 222 880
- JP-A- 2009 281 557
- JP-B2- 2 861 051

## Description

### TECHNICAL FIELD

The present invention relates to a head-up display device for which sunlight is taken into consideration.

### BACKGROUND ART

A driver of a vehicle performs driving while gazing forward through a windshield as well as viewing gauges on an instrument panel. That is, a line of sight moves forward and toward the lower gauges. If the driver can see the gauges as looking forward, there is no movement of the line of sight, and thus improvement in driveability can be expected. Head-up display devices have been developed on the basis of this knowledge, and have been put to practical use (see, for example, Patent Literature 1 (Fig. 1)).

As shown in Fig. 1 of Patent Literature 1, an image light ray emitted upward from a HUD display (2) (Parenthesized numbers indicate signs described in Patent Literature 1. The same applies hereinafter.) strikes an inner surface (5) of a windshield and is reflected and imaged in front of the driver (Patent Literature 1, paragraph [0012]). When not in use, external light (sunlight) is prevented from reaching the HUD display (2) by blocking an optical path by a shutter (4). This can prevent damage on the HUD display (2) (Patent Literature 1, paragraph [0006]).

The shutter (4) and a drive means for driving this shutter (4) are required, and therefore the head-up display device becomes large and expensive. Moreover, when the head-up display device is not in nonuse, i.e. during driving, the shutter (4) is open, and thus incidence of sunlight cannot be prevented under this situation. A structure capable of preventing the incidence of sunlight at all times including during driving is required.

Accordingly, the present inventors have previously proposed a head-up display device in which a countermeasure against sunlight has been devised without using a shutter (see, for example, Patent Literature 2 (Fig. 1)).

As shown in Fig. 1 of Patent Literature 2, a reflection-type polarizing film (21) is interposed in an optical path (Parenthesized numbers indicate signs described in Patent Literature 2. The same applies hereinafter). Due to a presence of the reflection-type polarizing film (21), a temperature of a liquid crystal shell (16) does not rise even if sunlight (b) enters (Patent Literature 2, paragraph [0013]). The reflection-type polarizing film (21) is attached to an upper surface of a glass substrate (22).

According to Patent Literature 2, it is possible to devise a countermeasure against sunlight at all times.

A planar reflecting mirror (23) and a concave reflecting mirror (24) are conventionally based on a resin molded product or an inorganic glass. In case of a resin molded product, after injection molding, the molded product is projected by an ejector pin. In doing so, a pin mark inevitably remains in the molded product. Conventionally, the pin mark is left on an outer peripheral portion of the molded product, and this outer peripheral portion has been covered by a frame-like member called a bezel.

In both of the resin molded product and the inorganic glass, when a metal is deposited on a reflective surface, it is necessary to grip an outer peripheral portion of the resin molded product or the inorganic glass. A grip mark inevitably remains in the outer peripheral portion of the resin molded product or the inorganic glass. If case of the bezel, the grip mark can be covered and hidden.

For this reason, there are cases where the bezel is employed in a head-up display device.

The concave reflecting mirror (24) exhibits an action of converging external light such as sunlight. Converging the light increases energy density, and generates a portion having a temperature higher than that of the concave reflecting mirror (24) or the like.

When a bezel is provided in a vicinity of a portion having a high temperature due to the external light, it is necessary to compose the bezel of a material having a heat resistance temperature higher than that of the concave reflecting mirror (24).

The material having a high heat resistance temperature is more expensive than a material having a low heat resistance temperature, and a machining cost also increases.

As a material cost and a machining cost of the bezel increase, a head-up display device becomes expensive. Hereinafter a sum of the material cost and the machining cost is referred to as a procurement cost.

However, while cost reduction of head-up display devices is required, a head-up display device having a structure such that the procurement cost of the bezel can be suppressed is desired.

### CITATION LIST

### PATENT LITERATURE

[Patent Literature 1] Japanese Unexamined Patent Application Publication No. 2003-237411
[Patent Literature 2] Japanese Patent No. 4114194
[Patent Literature 3] Japanese Patent No. 2861051
[Patent Literature 4] Japanese Unexamined Patent Application Publication No. 2009-222880

### SUMMARY OF THE INVENTION

### PROBLEMS TO BE SOLVED BY THE INVENTION

It is an object of the present invention to provide a head-up display device having a structure such that the procurement cost of the bezel can be suppressed.

### SOLUTION TO PROBLEM

To achieve the above object, in an invention according to Claim 1, a head-up display device includes a first mirror, a second mirror, and a case configured to house the first mirror and the second mirror, the head-up display device being formed with a cross optical path between the second mirror and the first mirror. The first mirror is disposed at a position receiving external light from the second mirror. The case is provided integrally with a frame-like bezel part configured to cover an outer peripheral portion of the first mirror as viewed from the second mirror side. The first mirror is supported by a mirror holder configured to cover a backside of a reflective surface, and the mirror holder is connected to the case, whereby the first mirror is attached to the case. The mirror holder comprises a resin material having a heat resistance temperature lower than that of the bezel part.

In an invention according to Claim 2, the case has a general part and a special part formed of a material having higher thermal conductivity or a higher heat resistance temperature than that of the general part, and the bezel part is integrally provided in the special part.

In an invention according to Claim 3, the bezel part is provided with, at a portion where external light from the second mirror strikes, an anti-reflection portion configured to weaken or prevent reflection of the external light.

In an invention according to Claim 4, the case includes a center frame configured to support the second mirror, an upper cover configured to be attached onto the center frame, to be integrally provided with the bezel part, and to support the first mirror; and a lower cover configured to be attached below the center frame.

In an invention according to Claim 5, the upper cover comprises a metal material.

In an invention according to Claim 6, the upper cover comprises a metal portion and a resin portion, and the bezel part is formed in the metal portion.

### EFFECT OF THE INVENTION

In an invention according to claim 1, a bezel part is formed integrally with a case.

The case (especially a portion that is exposed to external light from a second mirror) is composed of a material having a high heat resistance temperature. The bezel part is formed integrally with the case by partially deforming such case. The bezel part is composed of a material having a high heat resistance temperature similarly to the case.

When the bezel is composed of a separate component having a high heat resistance temperature, the procurement cost of the bezel increases; however, if the bezel part is formed integrally with the case simply by partially deforming the case as in the present invention, the procurement cost of the bezel can be reduced.

Therefore, according to the present invention, a head-up display device having a structure such that the procurement cost of the bezel can be suppressed is provided.

In an invention according to claim 2, the case has a general part and a special part formed of a material having higher thermal conductivity or a higher heat resistance temperature than that of the general part, and the bezel part is integrally provided in the special part. The general part can be formed of a less expensive material than that of the special part, and a material cost of the case can be reduced.

In an invention according to claim 3, the bezel part is provided with, at a portion where external light from the second mirror strikes, an anti-reflection portion configured to weaken or prevent reflection of the external light. Since the reflection is weaken or prevented by the anti-reflection portion, there is no concern that the reflected light returns to the second mirror. Even if the reflected light returns, the light is weakened to such an extent that does not cause actual harm.

In an invention according to claim 4, the case comprises: a center frame configured to support the second mirror; an upper cover configured to be attached onto the center frame, to be integrally provided with the bezel part, and to support the first mirror; and a lower cover configured to be attached below the center frame.

By composing the case of, the upper cover, the lower cover, and the center frame, it is possible to vary a material composing the center frame, the upper cover, and the lower cover. In particular, the lower cover can be formed of an inexpensive resin material having a low heat resistance temperature. As a result, the material cost of the case can be reduced.

In an invention according to claim 5, the upper cover is composed of a metallic material. The metallic material has a heat resistance temperature that is much higher than that of the resin material. The bezel part is also composed of a metallic material and has sufficient heat resistance. If the upper cover is entirely formed of the metallic material, the material cost increases whereas a machining cost can be reduced.

In an invention according to claim 6, the upper cover is composed of a metal portion including the bezel part and a resin portion. Since the resin portion is less expensive than the metal portion, the material cost of the upper cover can be reduced.

### BRIEF DESCRIPTION OF THE DRAWINGS

Fig. 1 is a cross-sectional view and an action view of a head-up display device according to the present invention.
Fig. 2 is a view illustrating action of external light.
Fig. 3 is an exploded view of the head-up display device.
Fig. 4 is a detailed view of a first mirror.
Fig. 5 is a view showing a modification example of an upper cover.

### MODE FOR CARRYING OUT THE INVENTION

An embodiment of the present invention will be described below with reference to the accompanying drawings.

### EMBODIMENT

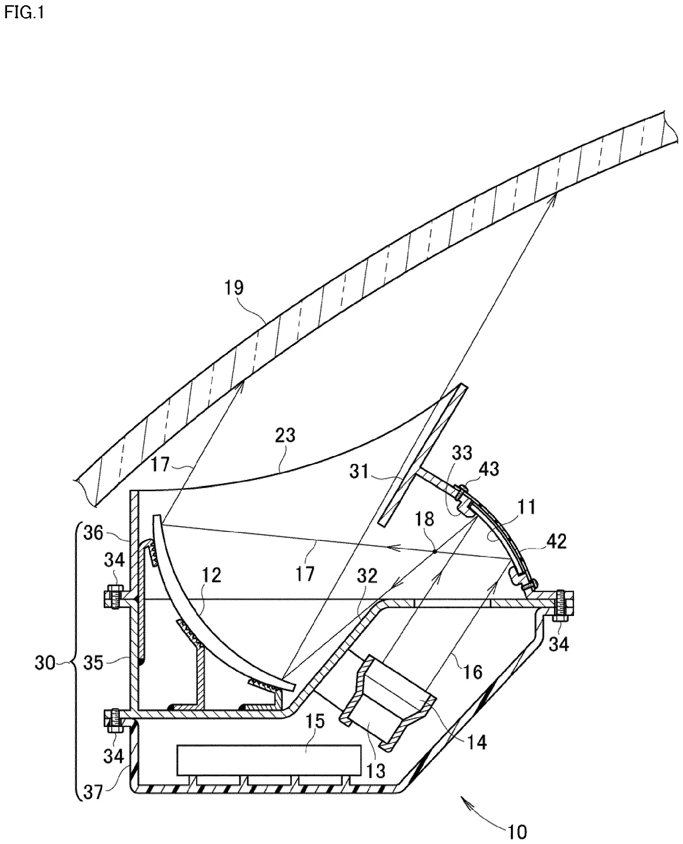

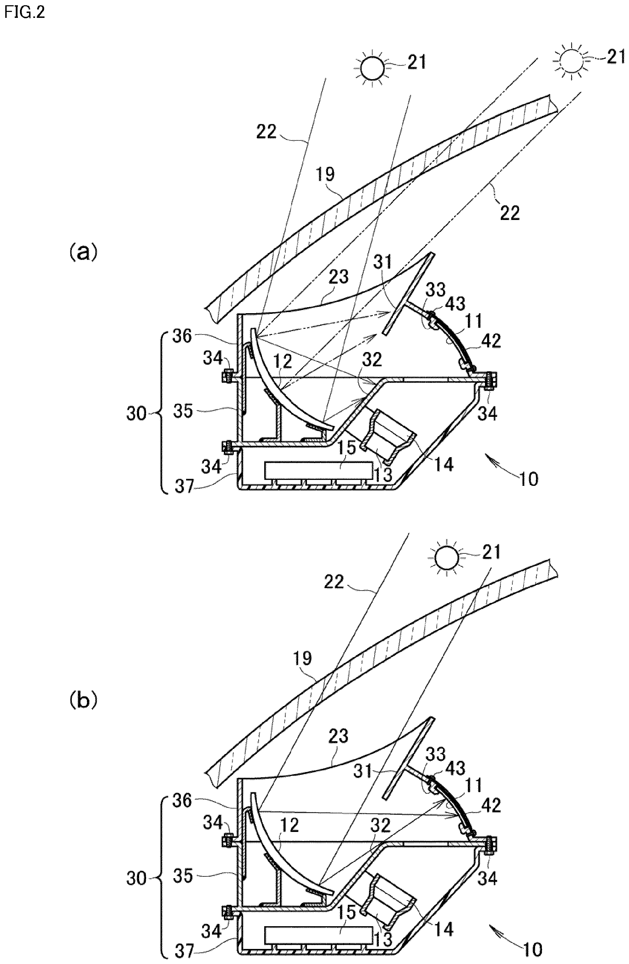

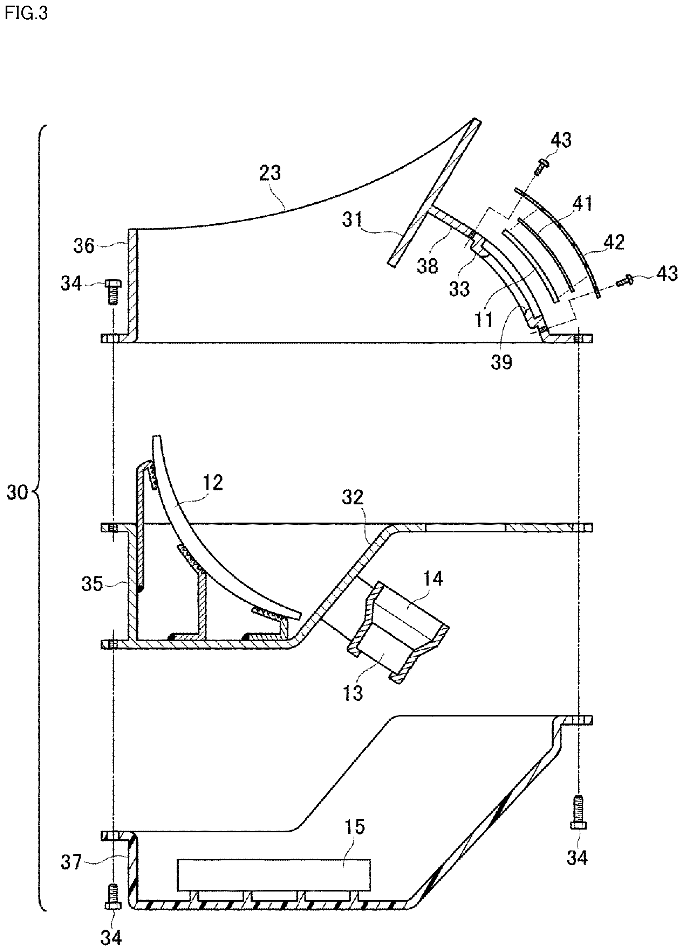

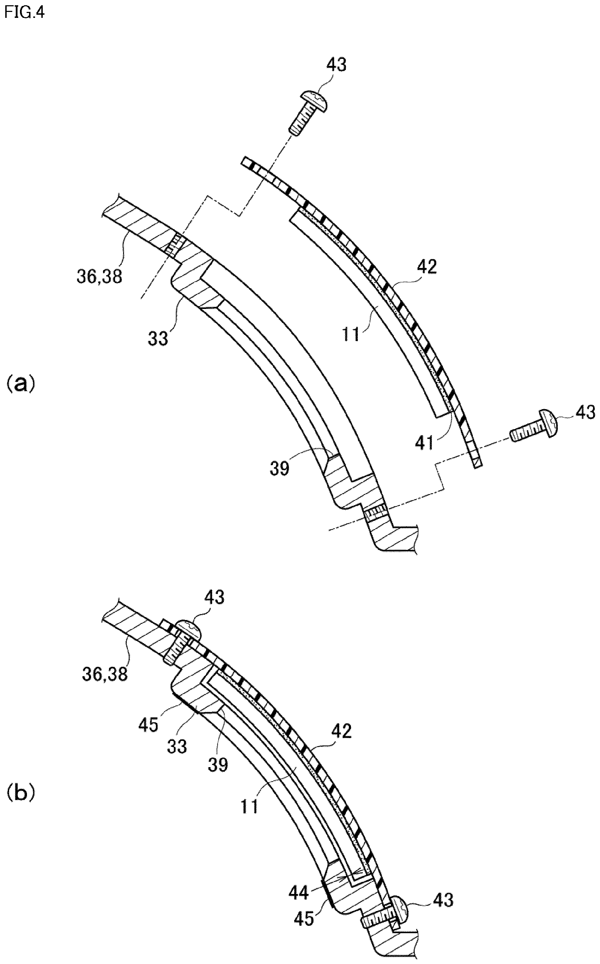

First, a basic configuration and basic action of a head-up display device 10 will be described with Fig. 1, the action of external light will be described with Fig. 2, and a detailed structure of the head-up display device 10 will be described with in Figs. 3 and 4.

As shown in Fig. 1, a head-up display device 10 is provided with a first mirror 11, a second mirror 12, and a case 30 that houses the first mirror 11 and the second mirror 12. A light source 13, a display 14, a substrate 15 are also housed in the case 30. A cross optical path is formed between the first mirror 11 and the second mirror 12.

Furthermore, the first mirror 11 is a concave mirror and has a curvature at which reflected light 17 is crossed above and below before reaching the second mirror 12 (a reciprocal of a radius), and the second mirror 12 is a concave mirror that serves to reflect the reflected light 17 received. That is, the first mirror 11 has a curvature such that a focal point of the first mirror 11 is positioned between the first mirror 11 and the second mirror 12. In other words, a distance from the first mirror 11 to the second mirror 12 is set to be longer than a focal length of the first mirror 11. In this manner, the cross optical path is formed between the first mirror 11 and the second mirror 12 in accordance with the curvature and a positional relationship of the first mirror 11 and the second mirror 12.

In the head-up display device 10, display light 16 is emitted from the display 14 disposed on the light source 13, and this display light 16 is reflected by the first mirror 11. The reflected light 17 is reflected by the second mirror 12 after crossing at a cross point 18 and reaches a windshield 19 of a vehicle.

As shown in Fig. 2 (a), external light (e.g. sunlight) 22 from an external light emitting source (for example, the sun. the light source in the right side of the Figure) 21 penetrates through the windshield 19 and enters into the case 30, is reflected by the second mirror12, and is blocked by the first shielding portion 31 when an angle of the external light emitting source 21 with respect to an exit aperture 23 of the reflected light 17 of the case 30 is small (when a solar altitude is low).

In addition, when the angle of the external light emitting source 21 with respect to the exit aperture 23 of the reflected light 17 of the case 30 is large (when the solar altitude is high), the external light 22 penetrates through the windshield 19 and enters into the case 30, is reflected by the second mirror 12, and is blocked by a second light shielding portion 32. The first shielding portion 31 and the second shielding portion 32 extend to a vicinity of the cross point (Fig. 1, reference sign 18) so as to narrow the optical path.

In most angles (solar altitudes) of the external light emitting source 21, since the external light 22 is blocked by the first shielding portion 31 and the second shielding portion 32, a temperature rise in the first mirror 11 is reduced.

As shown in Fig. 2 (b), when the angle of the external light emitting source 21 with respect to the exit aperture 23 of the reflected light 17 of the case 30 is a predetermined angle (when the solar altitude is a predetermined value), the external light 22 penetrates through the windshield 19 and enters the case 30, is reflected by the second mirror 12, passes between the first light shielding portion 31 and the second light shielding portion 32 while converging, and crosses in a vicinity of the first mirror 11.

In the head-up display device 10 in which the cross optical path is formed between the first mirror 11 and the second mirror 12, there are cases where a temperature in a frame-like bezel part 33 that covers an outer periphery portion of the first mirror 11 increases more than other part (general part) due to condensing of the external light 22. The external light emitting source 21 may be exterior lighting in addition to the sun.

As shown in Fig. 3, the case 30 is comprised of, for example: a center frame 35 that supports the second mirror 12, the light source 13 and the display 14; an upper cover 36 that is disposed on the center frame 35, is provided integrally with the bezel part 33 and supports the first mirror 11; and a lower cover 37 that is disposed below the center frame 35 and supports the substrate 15. The upper cover 36 and the lower cover 37 are fastened to the center frame 35 by a bolt 34. The fastening method may be a screw, a clip, or an adhesive in addition to the bolt.

The center frame 35 is a backbone of the head-up display device 10, and strength is required. While both resins and metals can be employed for a material, a metal is desired in terms of the strength and a heat resistance temperature.

A common metal and a light metal can be employed for the metal, and a lighter light metal is more preferable.

Among light metals, an aluminum alloy is particularly desirable. In case of the aluminum alloy, an aluminum die-cast product is preferable. The aluminum die-cast product is a casting product, and thus mass production is possible, and the cost can be reduced by the mass production. A magnesium alloy can also be employed for a lightweight metal. Therefore, a metallic material can be arbitrarily selected from metals including a lightweight metal, and kinds of the metals are not exceptionally limited.

The second shielding portion 32 is included in the center frame 35, and while this second shielding portion 32 is heated by the external light (Fig. 2 (a), the reference sign 22), if case of a metal (e.g., aluminum die casting), sufficient heat resistance performance can be obtained.

The lower cover 37 is only for housing the substrate 15, and thus temperature conditions are less stringent. Thus, the lower cover 37 can be a resin having a heat resistance temperature lower than that of the aluminum die-casting, for example, an ABS resin molded product. The resin molded product is much less expensive than the aluminum die-cast product.

Regarding the upper cover 36, as illustrated in Fig. 1, the heat resistance performance is required in the bezel part 33 and the first shielding portion 31. Suppose that the upper cover 36 is the aluminum die-cast product. The bezel part 33 and the first shielding portion 31 necessarily become an aluminum alloy. In case of the aluminum alloy, sufficient heat resistance performance can be obtained.

The upper cover 36 includes the exit aperture 23 of the reflected light 17 and a curved wall part 38, a through-hole 39 is provided in the curved wall part 38, and the bezel part 33 is integrally formed around the through-hole 39. The exit aperture 23 is closed with a cover glass (not shown).

The first mirror 11 is formed by depositing a reflective film on an inorganic glass or a transparent resin. An outer peripheral portion of the glass or resin is gripped at the time of the deposition. While a gripping trace is inevitably generated, this gripping trace is hidden by the bezel part 33.

Such first mirror 11 is affixed to a mirror holder 42 with the use of an adhesive 41. The mirror holder 42 is a member that covers a rear surface (a surface opposite to a reflective surface) of the first mirror 11 and is not directly struck by the external light 22, and thus is composed of an inexpensive resin having a heat resistance temperature lower than that of the bezel part 33.

As shown in Fig. 4 (a), the bezel part 33 is integrally formed in the curved wall part 38 of the upper cover 36. In a case where the upper cover 36 is a die-cast product, the curved wall part 38 can be manufactured with the through-hole 39 and the bezel part 33 in a single casting (die casting). As compared with a case where the case bezel part 33 is a separate component, since the bezel part 33 is integrated, the procurement cost of the bezel part 33 can be reduced.

The mirror holder 42 is placed on such upper cover 36 from a back and fixed to the upper cover 36 by a screw 43 for example. The bezel part 33 is integrated with the upper cover 36 whereas the mirror holder 42 is a component separated from the case 30; however, the mirror holder 42 is composed of a resin material that is more inexpensive (having lower heat resistance) than that of the bezel part 33, and thus, as compared with a case where the bezel part 33 is a separate component, the procurement cost of the separate component can be reduced.

As shown in Fig. 4 (b), when viewed from the second mirror 12, the first mirror 11 is attached to the upper cover 36 in such a manner that an outer peripheral portion of the first mirror 11 is covered by the bezel part 33. A small gap 44 is provided between the bezel part 33 and the first mirror 11. When the bezel part 33 and the first mirror 11 are heated by the external light 22, a difference comes out in an expansion amount between the bezel part 33 and the first mirror 11. If there is the gap 44, there would be no concern that expansion or contraction of the bezel part 33 would affect the first mirror 11.

In Fig. 1, when the external light 22 striking the bezel part 33 is reflected and returns to the second mirror 12, the external light 22 is reflected again by the second mirror 12, and it is concerned that the re-reflected light is directed to the first mirror 11 without striking the first and second shielding portions 31 and 32. A countermeasure against this is desired.

Accordingly, in the bezel part 33 shown in Fig. 4 (b), it is desired that an anti-reflection portion 45 that weakens or prevents reflection of external light 22 is provided at a portion where the external light 22 strikes.

The anti-reflection portion 45 can be formed of a black paint, a black film, a black tape, and if a base material is aluminum, the anti-reflection portion 45 can be formed of a black alumite. Alternatively, the anti-reflection portion 45 can be roughened by sandblasting a smooth surface.

For the same reason, it is preferable that the first shielding portion 31 and the second shield portion 32 shown in Fig. 1 are subjected to an anti-reflection treatment.

Next, a modification example of the upper cover 36 will be described.

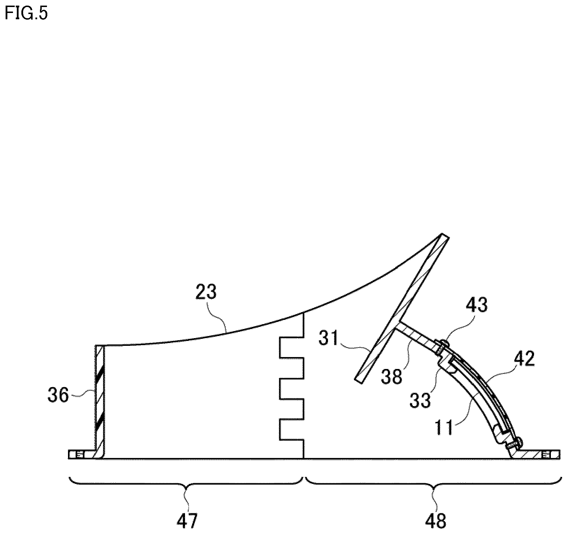

As shown in Fig. 5, the upper cover 36 is composed of a resin portion 47 and a metal portion 48, and the bezel part 33 and the first shielding portion 31 are included in the metal portion 48. The resin portion 47 does not include the bezel part 33 and the first shielding portion 31, and thus it is possible to lower the heat resistance temperature. As a result, a resin material that is less expensive than that of the metal portion 48 can be used for the resin portion 47.

The metal portion 48 is placed on a resin molding die, and then a molten resin is injected into a cavity, whereby the upper cover 36 is obtained. In this case, a bond strength is enhanced when a boundary portion between the metal portion 48 and the resin portion 47 has a sawtooth appearance.

Alternatively, the metal portion 48 and the resin portion 47 can be each manufactured and be bonded to each other via adhesion, bolting or the like. Therefore, a manufacturing method of the upper cover 36 is arbitrary.

While the case 30 has been divided into three: the center frame 35, the upper cover 36 and the lower cover 37 in Fig. 3, the case 30 may be two separate components or an undivided integral component.

In any of the three separate components, the two separate components or the undivided integral component, the case 30 can be composed of a general part and a special part (e.g. the curved wall part 38) formed of a material having higher thermal conductivity or a higher heat resistance temperature than that of the general part. In addition, the bezel part 33 is provided integrally in the special part.

The general part can be formed of a less expensive material than that of the special part, and a material cost of the case 30 can be reduced.

For the special part, it is better to have higher thermal conductivity or a higher heat resistance temperature than that of the general part, and thus a specific resin can be used in addition to metals. A specific example thereof will be described in detail.

**[Table 1]**

| | General Part of Case | Special Part of Case |
|---|---|---|
| Combination Example 1 | ABS resin (110°C) | PC resin (150°C) |
| Combination Example 2 | PP resin (168°C) | epoxy resin [180°C] |
| Combination Example 3 | PC resin (150°C) | aluminium die-cast (580°C) |

| | | |
|---|---|---|
| ( ) is a molten temperature (reference value) [ ] is a heat resistance temperature (reference value) | | |

The heat resistance temperature is shown only for an epoxy resin that is a thermosetting resin. Molten temperatures are shown for others.

Generally, there is a correlation between the heat resistance temperature and the molten temperature. That is, there is a tendency that the higher the molten temperature is, the higher the heat resistance temperature is, and the lower the molten temperature is, the lower the heat resistance temperature is.

In Combination Example 1 and Combination Example 2, resins have been combined. In Combination Example 3, a resin and a light metal have been combined.

In Combination Example 3, a resin and an aluminum die-cast have been combined.

Instead of enhancing the heat resistance, thermal conductivity may be enhanced.

**[Table 2]**

| | General Part of Case | Special Part of Case |
|---|---|---|
| Combination Example 3 | PC resin (about 0.2W/m·k) | aluminium die-cast (about 100W/m·K) |

| | | |
|---|---|---|
| ( ) is thermal conductivity | | |

When thermal conductivity is enhanced, heat transfer is promoted. So-called heat accumulation is prevented, and an overall temperature of the die-cast aluminum decreases. That is, a temperature of the special part decreases, and strength of the special part (the bezel part 33, etc.) against heat can be enhanced.

The head-up display device 10 of the present invention is suitable for a passenger car, and may be applied to a general vehicle, ship, and aircraft.

### INDUSTRIAL APPLICABILITY

The head-up display device of the present invention is suitable for a vehicle with a windshield.

### DESCRIPTION OF REFERENCE NUMERALS

10 head-up display device
11 first mirror
12 second mirror
18 cross point
22 external light
30 case
33 bezel part
35 center frame
36 upper cover
37 lower cover
42 mirror holder
45 anti-reflection portion
47 resin portion
48 metal portion

## Claims

1. A head-up display device comprising:
a first mirror (11);
a second mirror (12); and
a case (30) configured to house the first mirror (11) and the second mirror (12),
wherein the first mirror (11) is disposed at a position receiving external light (22) from the second mirror (12),
wherein the case (30) is provided integrally with a frame-like bezel part (33) configured to cover an outer peripheral portion of the first mirror (11) as viewed from the second mirror (12) side,
wherein the first mirror (11) is supported by a mirror holder (42) configured to cover a backside of a reflective surface, and the mirror holder (42) is connected to the case (30), whereby the first mirror (11) is attached to the case (30),
**characterized in that** the head-up display device is being formed with a cross optical path between the second mirror (12) and the first mirror (11), and
the mirror holder (42) comprises a resin material having a heat resistance temperature lower than that of the bezel part (33).

2. The head-up display device according to claim 1,
wherein the case (30) has a general part and a special part formed of a material having higher thermal conductivity or a higher heat resistance temperature than that of the general part, and
wherein the bezel part (33) is integrally provided in the special part.

3. The head-up display device according to claim 1,
wherein the bezel part (33) is provided with, at a portion where external light (22) from the second mirror (12) strikes, an antireflection portion (45) configured to weaken or prevent reflection of the external light (22).

4. The head-up display device according to claim 1,
wherein the case (30) comprises:
a center frame (35) configured to support the second mirror (12);
an upper cover (36) configured to be attached onto the center frame (35), to be integrally provided with the bezel part
and to support the first mirror (11); and
a lower cover (37) configured to be attached below the center frame (35).

5. The head-up display device according to claim 4, wherein the upper cover (36) comprises a metal material.

6. The head-up display device according to claim 4,
wherein the upper cover (36) comprises a metal portion and a resin portion, and
wherein the bezel part (33) is formed in the metal portion.

## Patentansprüche

1. Head-Up-Anzeigevorrichtung, die Folgendes umfasst:
einen ersten Spiegel (11);
einen zweiten Spiegel (12); und
ein Gehäuse (30), das zur Unterbringung des ersten Spiegels (11) und des zweiten Spiegels (12) konfiguriert ist,
wobei der erste Spiegel (11) an einer Position angeordnet ist, an der er externes Licht (22) von dem zweiten Spiegel (12) empfängt,
wobei das Gehäuse (30) integral mit einem rahmenartigen Einfassungsteil (33) vorgesehen ist, der dazu konfiguriert ist einen Außenperipherieabschnitt des ersten Spiegels (11) bei Betrachtung von der Seite des zweiten Spiegels (12) aus zu bedecken,
wobei der erste Spiegel (11) von einer Spiegelhalterung (42) gestützt wird, die dazu konfiguriert ist, eine Rückseite einer reflexiven Fläche zu bedecken, und die Spiegelhalterung (42) mit dem Gehäuse (30) verbunden ist, wodurch der erste Spiegel (11) an dem Gehäuse (30) angebracht ist,
**dadurch gekennzeichnet, dass** die Head-Up-Anzeigevorrichtung mit einem optischen Querpfad zwischen dem zweiten Spiegel (12) und dem ersten Spiegel (11) ausgebildet ist, und
die Spiegelhalterung (42) ein Harzmaterial mit einer Hitzebeständigkeitstemperatur, die unter jener des Einfassungsteils (33) liegt, umfasst.

2. Head-Up-Anzeigevorrichtung nach Anspruch 1,
wobei das Gehäuse (30) einen allgemeinen Teil und einen speziellen Teil, der aus einem Material mit einer höheren Wärmeleitfähigkeit oder einer höheren Hitzebeständigkeitstemperatur als jene des allgemeinen Teils ausgebildet ist, umfasst, und wobei der Einfassungsteil (33) integral in dem speziellen Teil vorgesehen ist.

3. Head-Up-Anzeigevorrichtung nach Anspruch 1,
wobei der Einfassungsteil (33) an einem Abschnitt, auf den externes Licht (22) von dem zweiten Spiegel (12) auftrifft, mit einem Antireflexionsabschnitt (45) versehen ist, der dazu konfiguriert ist, die Reflexion des externen Lichts (22) abzuschwächen oder zu verhindern.

4. Head-Up-Anzeigevorrichtung nach Anspruch 1,
wobei das Gehäuse (30) Folgendes umfasst:
einen mittigen Rahmen (35), der dazu konfiguriert ist, den zweiten Spiegel (12) zu stützen;
eine obere Abdeckung (36), die zur dahingehenden Anbringung an dem mittigen Rahmen (35), integral mit dem Einfassungsteil vorgesehen zu sein und den ersten Spiegel (11) zu stützen, konfiguriert ist;
und
eine untere Abdeckung (37), die zur Anbringung unter dem mittigen Rahmen (35) konfiguriert ist.

5. Head-Up-Anzeigevorrichtung nach Anspruch 4, wobei die obere Abdeckung (36) ein Metallmaterial umfasst.

6. Head-Up-Anzeigevorrichtung nach Anspruch 4,
wobei die obere Abdeckung (36) einen Metallabschnitt und einen Harzabschnitt umfasst, und
wobei der Einfassungsteil (33) in dem Metallabschnitt ausgebildet ist.

## Revendications

1. Dispositif d'affichage tête haute, comprenant :
un premier miroir (11) ;
un deuxième miroir (12) ; et
un boîtier (30) configuré pour recevoir le premier miroir (11) et le deuxième miroir (12),
le premier miroir (11) étant disposé dans une position recevant la lumière extérieure (22) provenant du deuxième miroir (12),
le boîtier (30) étant prévu intégralement avec une partie biseautée de type cadre (33) configurée pour couvrir une portion périphérique extérieure du premier miroir (11), vu depuis le côté du deuxième miroir (12), le premier miroir (11) étant supporté par un support de miroir (42) configuré pour couvrir un côté arrière d'une surface réfléchissante, et le support de miroir (42) étant connecté au boîtier (30), ce par quoi le premier miroir (11) est attaché au boîtier (30),
**caractérisé en ce que** le dispositif d'affichage tête haute est formé avec un trajet optique croisé entre le deuxième miroir (12) et le premier miroir (11), et
le support de miroir (42) comprend un matériau à base de résine ayant une température de résistance thermique inférieure à celle de la partie biseautée (33).

2. Dispositif d'affichage tête haute selon la revendication 1,
dans lequel le boîtier (30) présente une partie générale et une partie spéciale formée d'un matériau ayant une plus grande conductibilité thermique ou une plus grande température de résistance thermique que celle de la partie générale, et
dans lequel la partie biseautée (33) est prévue intégralement dans la partie spéciale.

3. Dispositif d'affichage tête haute selon la revendication 1,
dans lequel la partie biseautée (33) est pourvue d'une portion antireflet (45) configurée pour affaiblir ou empêcher la réflexion de la lumière extérieure (22) au niveau d'une portion dans laquelle la lumière extérieure (22) arrive depuis le deuxième miroir (12).

4. Dispositif d'affichage tête haute selon la revendication 1,
dans lequel le boîtier (30) comprend :
un cadre central (35) configuré pour supporter le deuxième miroir (12) ;
un recouvrement supérieur (36) configuré pour être attaché sur le cadre central (35), devant être prévu intégralement avec la partie biseautée, et pour supporter le premier miroir (11) ; et
un recouvrement inférieur (37) configuré pour être attaché en dessous du cadre central (35).

5. Dispositif d'affichage tête haute selon la revendication 4,
dans lequel le recouvrement supérieur (36) comprend un matériau métallique.

6. Dispositif d'affichage tête haute selon la revendication 4,
dans lequel le recouvrement supérieur (36) comprend une portion métallique et une portion à base de résine, et la partie biseautée (33) est formée dans la portion métallique.
